# EUROPÄISCHE PATENTANMELDUNG

(11) **EP 1 191 658 A2**
(43) Veröffentlichungstag der Anmeldung: **27.03.2002**
(21) Anmeldenummer: 01119194.7
(22) Anmeldetag: 09.08.2001
(51) Int. Cl.: H02H 7/085

(54) **Lastadaptives Steuerungssystem, insbesondere für Transporteinrichtungen wie in Flugzeugen**

(30) Priorität: 01.09.2000 DE 10043020
(71) Anmelder: Wittenstein GmbH & Co. KG, 97999 Igersheim (DE)
(72) Erfinder: Kalker, Thoams, Dr., 97999 Igersheim (DE)
(74) Vertreter: Weiss, Peter, Dr.

(57) **Zusammenfassung**

Die Erfindung betrifft eine Überwachungseinheit (5) zur Überwachung eines ersten Steuerungswertes (Iₛₒₗₗ) auf Über- oder Unterschreiten eines Schwellwertes (Iₘₐₓ), wobei der erste Steuerungswert (Iₛₒₗₗ) zur Steuerung einer Vorrichtung (3) verwendet wird. Die Überwachungseinheit (5) weist dabei Ermittlungsmittel (10, 20, 30, 40, 45) zum Ermitteln des Schwellwertes (Iₘₐₓ) aus einem Momentanwert (Iₛ) des ersten Steuerungswertes (Iₛₒₗₗ) bei Erreichen eines vorgegebenen Betriebszustandes der Vorrichtung (3), und Überwachungsmittel (50, 60) zur Überwachung des ersten Steuerungswertes (Iₛₒₗₗ) auf Über- oder Unterschreiten des ermittelten Schwellwertes (Iₘₐₓ) nach Erreichen des vorgegebenen Betriebszustandes der Vorrichtung (3) auf.

## Beschreibung

Die vorliegende Erfindung betrifft eine Steuerung, insbesondere für eine Transporteinrichtungen wie in Flugzeugen.

Zum Beladen von Flugzeugen werden überwiegend ungeregelte Förderbänder verwendet, die zunächst in einem unbewegten Zustand entlang ihrer Breite mit Ladungsstücken bestückt werden. Typischerweise nach vollständiger Bestückung der gesamten Förderbandbreite wird das Förderband weiterbewegt, so dass die auf dem Förderband sich befindliche Ladung weiter nach hinten in das Flugzeug hineinbewegt wird.

Damit gliedert sich bei diesen Beladungssystemen der Beladungsvorgang in zwei immer wieder aufeinanderkehrende Schritte, nämlich einen ersten Beladungsschritt, bei dem im Ruhezustand des Bandes dieses mit Ladung bestückt wird, und einen zweiten Förderungsschritt, bei dem das beladene Band weiterbewegt wird. Auf diese Weise kann durch die wiederkehrende Schrittfolge das Flugzeug Lage um Lage bestückt werden. Da die Gesamtlast mit jedem Beladungsschritt vergrössert wird, steigt auch entsprechend die Förderungslast bei jedem Förderungsschritt an.

Für den gesamten Beladevorgang sind die ersten Beladeschritte typischerweise unproblematisch, da hier zum einen noch wenig Last bewegt werden muss, und zum andern, da sich die Bestückung regelmässig auch noch weitgehend im Sichtbereich des Bestückers befindet. Ein Verrutschen der Ladung evtl. mit der Folge, dass das Förderband mehr oder minder blockiert wird, kann bei diesen ersten Beladungsschritten zumeist noch gut erkannt werden. Zudem ist die Leistung des förderbandantreibenden Motors typischerweise auch so dimensioniert, dass bei erst teilweiser Beladung des Förderbandes ein geringes Verklemmen oder Verrutschen der Ladung noch nicht gleich zu einem totalen Blockieren des Förderbandes führt.

Allerdings ist ohne Weiteres ersichtlich, dass mit zunehmendem Beladungsvorgang und damit steigender zu bewegender Förderlast und Entfernung der Ladung von dem Bestückungsort die Fehlerwahrscheinlichkeit, z.B. durch Verrutschen oder Verklemmen einzelner Ladungsstücke, steigt. Dies kann zu einer völligen Blockade des Förderbands führen noch bevor das Förderband vollständig bestückt ist, was gerade in zeitkritischen Situationen, wie dem Be- und Entladen von Flugzeugen, zu ungewünschten und evtl. kostspieligen Zeitverzögerungen führen kann, bis der Fehler erkannt und behoben worden ist. Zudem kann das Blockieren einzelner Ladungsstücke, ohne dass es zu einer Totalblockade kommt, zu mehr oder minder lang andauernden Leistungsspitzen bei dem Förderbandmotor führen, was wiederum die Wartungsintervalle für die Förderanlage verkürzen und auf Dauer deren Lebenszeit reduzieren kann.

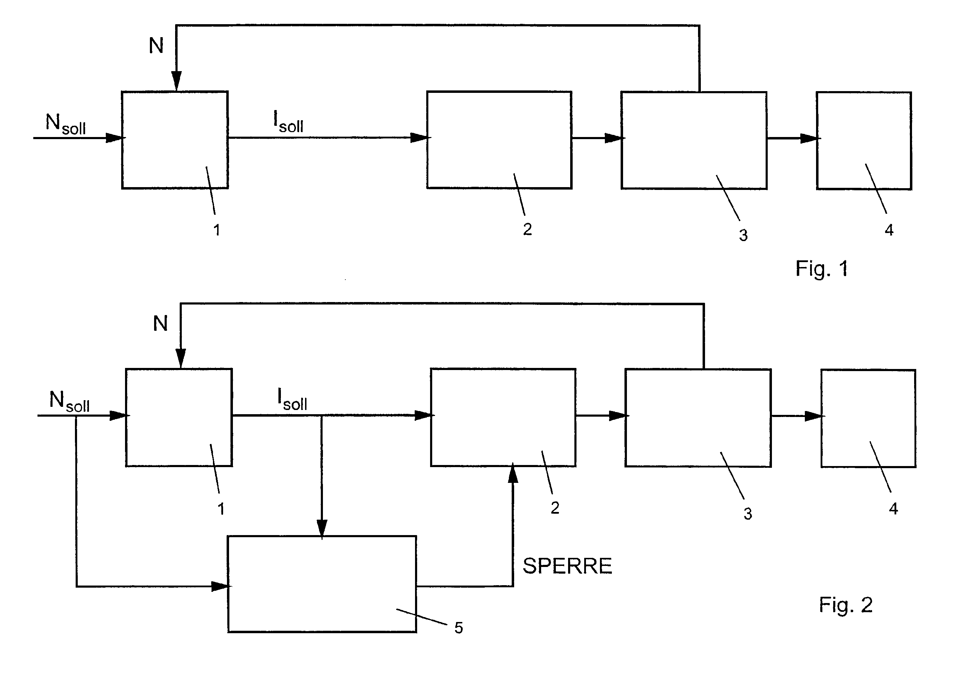

Während gegenwärtig bei den Förderbandsystemen zur Flugzeugbestückung überwiegend ungeregelte Drehstrommotoren eingesetzt werden, zeigt Figur 1 ein geregeltes Servoantriebssystem. Ein Regler 1 erhält als Eingangsgrössen eine Soll-Drehzahl Nₛₒₗₗ und eine gemessene tatsächliche Ist-Drehzahl N. Der Regler 1 bestimmt aus der Differenz der Ist-Drehzahl N zu der Soll-Drehzahl Nₛₒₗₗ einen Stromwert Iₛₒₗₗ, der im Wesentlichen einem einzustellenden Drehmoment entspricht. Der Regler 1 liefert den Stromwert Iₛₒₗₗ an einen Verstärker 2, der wiederum auf einen Aktuator (oder Motor) 3 einwirkt. Der Aktuator 3 betätigt eine Last 4. Die Ist-Drehzahl N wird bei dem Aktuator 3 gemessen und an den Regler 1 zurückgestellt.

Das in Figur 1 gezeigte geregelte Servoantriebssystem erlaubt gegenüber dem ungeregelten Antriebssystem ein Nachregeln des Drehmoments des Aktuators 3, insofern dessen Drehzahl N nicht mit der Solldrehzahl Nₛₒₗₗ übereinstimmt. Problematisch bei dieser Anordnung sind jedoch Spitzen in der Last 4, die bei einem Abweichen der Ist-Drehzahl N von der Soll-Drehzahl Nₛₒₗₗ zu einem Herauffahren der Leistung des Aktuators 3 führen und diesen damit evtl. übergebührlich belasten können.

Zudem werden Fehlfunktionen z.B. durch Blockieren oder Verklemmen von Ladungsstücken nicht erkannt und können den Aktuator 3 so weiter belasten.

Der vorliegenden Erfindung liegt die Aufgabe zugrunde, eine verbesserte Beladungseinrichtung zu schaffen, die sich insbesondere auch zum Beladen von Flugzeugen einsetzen lässt.

Mit der vorliegenden Erfindung wird eine Überwachungseinheit geschaffen zur Überwachung eines ersten Steuerungswertes auf Über- oder Unterschreiten eines Schwellwertes, der zur Steuerung einer Vorrichtung verwendet wird. Die Überwachungseinheit weist dabei Ermittelungsmittel zum Ermitteln des Schwellwertes aus einem Momentanwert des ersten Steuerungswertes bei Erreichen eines vorgegebenen Betriebszustandes der Vorrichtung auf. Ferner weist die Überwachungseinheit Überwachungsmittel zur Überwachung des ersten Steuerungswertes auf Über- oder Unterschreiten des ermittelten Schwellwertes nach Erreichen des vorgegebenen Betriebszustandes der Vorrichtung auf.

Durch die Ermittlung des Schwellwertes aus dem Momentanwert des ersten Steuerungswertes bei Erreichen des vorgegebenen Betriebszustandes der Vorrichtung kann die Überwachungseinheit eine adaptive Überwachung des ersten Steuerungswertes, jeweils angepasst an die Verhältnisse, die bei Erreichen des vorgegebenen Betriebszustandes auch tatsächlich vorliegen, erreichen.

In einer bevorzugten Ausführungsform weist das Ermittelungsmittel ein erstes Erkennungsmittel zum Überwachen eines Betriebsparameters der Vorrichtung zur Erkennung des vorgegebenen Betriebszustandes der Vorrichtung auf. Das Erkennungsmittel schliesst dabei aus dem Verhalten des Betriebsparameters auf das Erreichen des vorgegebenen Betriebszustandes der Vorrichtung zurück.

Vorzugsweise weist das erste Erkennungsmittel einen Vergleicher zum Vergleichen eines vorgegebenen Wertes des Betriebsparameters mit einem modellierten Wert für den Betriebsparameter auf, wobei bei Übereinstimmen der Werte auf ein Erreichen des vorgegebenen Betriebszustandes der Vorrichtung geschlossen wird. Über die Modellierung der Werte für den Betriebsparameter kann dabei das Erreichen des vorgegebenen Betriebszustandes unabhängig von den tatsächlichen Verhältnissen definiert und variiert werden. Hierdurch lässt sich insbesondere der Einfluss von Einschwingvorgängen (z.B. mit einem Über- und/oder Unterschwingen), die fälschlicherweise ein Erreichen des vorgegebenen Betriebszustandes indizieren könnten, reduzieren.

Alternativ zu dem modellierten Wert kann der Vergleicher auch den vorgegebenen Wert des Betriebsparameters mit einem tatsächlichen Wert des Betriebsparameters vergleichen. Hierdurch kann das Erreichen des vorgegebenen Betriebszustandes abhängig von den tatsächlichen Verhältnissen definiert werden.

Vorzugsweise wird der Momentanwert zum Zeitpunkt des Erreichens des vorgegebenen Betriebszustandes gespeichert. Dieser gespeicherte Wert stellt dann den Ausgangswert für die weitere Überwachung des ersten Steuerungswertes dar.

In einer weiteren Ausführungsform weist das Ermittelungsmittel ein Bestimmungsmittel zur Bestimmung des Schwellwertes aus dem Momentanwert des ersten Steuerungswertes bei Erreichen des vorgegebenen Betriebszustandes der Vorrichtung und aus einer zulässigen Abweichung auf. Dabei kann die zulässige Abweichung z.B. einer fester Wert sein oder auch adaptiv an die gegebenen Verhältnisse angepasst werden.

Vorzugsweise weist das Überwachungsmittel ein zweites Erkennungsmittel zur Erkennung, ob der erste Steuerungswert den ermittelten Schwellwert über- oder unterschreitet, auf.

Das Überwachungsmittel weist bevorzugt ein drittes Erkennungsmittel zur Erkennung, ob der erste Steuerungswert den ermittelten Schwellwert über- oder unterschreitet und ob der vorgegebene Betriebszustand der Vorrichtung vorliegt, auf. Hierdurch kann die Überwachung auf Überoder Unterschreitung des ermittelten Schwellwertes auf den Zeitraum nach Erreichen des vorgegebenen Betriebszustandes der Vorrichtung begrenzt werden. Vorzugsweise wird bei Über- oder Unterschreiten des ermittelten Schwellwertes ein Warnsignal für die Vorrichtung gesetzt.

Die erfindungsgemässe Überwachungseinheit findet bevorzugt Anwendung für eine Steuerung, wie z.B. für einen Aktuator. Die Steuerung kann dabei insbesondere für solche Transporteinrichtungen, wie z.B. in einem Flugzeug, genutzt werden, bei denen zunächst eine Beladung in einem Ruhezustand und daran anschliessend ein Weitertransport erfolgt, wie dies eingangs beschrieben wurde.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 ein bekanntes geregeltes Servoantriebssystem;
Figur 2 eine bevorzugte Ausführungsform gemäss der vorliegenden Erfindung;
Figur 3 in Blockschaltdarstellungsweise ein bevorzugtes Ausführungsbeispiel des Entscheiders 5 aus Figur 2; und
Figuren 4 und 5 eine Darstellung der Arbeitsweise des Entscheiders 5 mit unterschiedlichen Belastungen.

Figur 2 zeigt eine bevorzugte Ausführungsform gemäss der vorliegenden Erfindung für das Beispiel einer Steuerung für eine Transporteinrichtung, insbesondere in Flugzeugen. Entsprechend der Darstellung in Figur 1 weist die Steuerung nach Figur 2 den Regler 1, den Verstärker 2 und den Aktuator 3 auf, der wiederum die Last 4 betätigt. Der Regler 1 erhält als Eingangsgrössen die Soll-Drehzahl Nₛₒₗₗ und die Ist-Drehzahl N und ermittelt hieraus einen Steuerungswert zur Steuerung des Aktuators 3. Vorzugsweise ist dieser Steuerungswert als Ausgabe des Reglers 1 der Stromwert Iₛₒₗₗ, der über den Verstärker 2 dem Aktuator 3 zugeführt wird und der im Wesentlichen dem einzustellenden Drehmoment für den Aktuator 3 entspricht. Der Aktuator 3 liefert den Istwert N seiner Drehzahl an den Regler 1 zurück.

Im Gegensatz zu der in Figur 1 dargestellten Steuerung weist die Steuerung nach Figur 2 zusätzlich noch einen Entscheider 5 auf, der als Eingangsgrössen die Soll-Drehzahl Nₛₒₗₗ und den Ausgabewert des Reglers 1 (hier: den Stromwert Iₛₒₗₗ) erhält. Ein Ausgang "SPERRE" des Entscheiders 5 wirkt auf den Verstärker 2, um gegebenenfalls den Aktuator 3 zu sperren. Der Begriff "sperren" kann hier bedeuten, dass der Aktuator 3 ganz abgeschaltet oder nur drehmomentfrei geschaltet wird. Im letzteren Fall bremst dann die Last 4 den Aktuator 3 zurück.

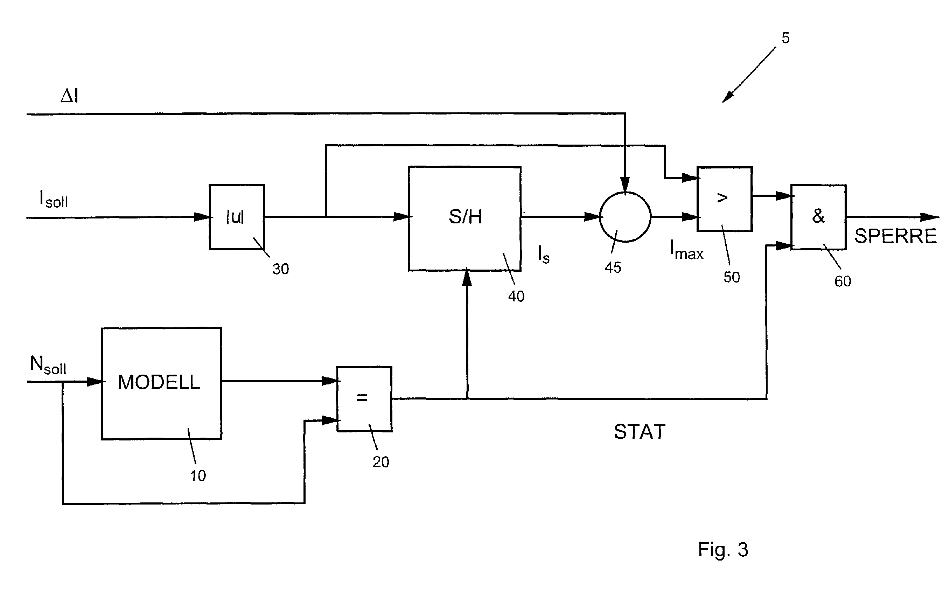

Figur 3 zeigt in Blockschaltdarstellungsweise ein bevorzugtes Ausführungsbeispiel des Entscheiders 5. Die Soll-Drehzahl Nₛₒₗₗ wirkt auf einen Modellblock 10, der einen modellierten Drehzahlverlauf über der Zeit erzeugt oder berechnet hat und diesen an seinen Ausgang legt. Der Ausgang des Modellblocks 10 und die Soll-Drehzahl Nₛₒₗₗ werden einem Vergleicher 20 als Eingangsgrössen zugeführt. Wenn die Eingangsgrössen des Vergleichers 20 übereinstimmen, also wenn die augenblicklichen Werte der Soll-Drehzahl Nₛₒₗₗ und der modellierten Motordrehzahl des Modellblocks 10 übereinstimmen, wird als Ausgang des Vergleiches 20 ein Signal STAT gestellt. In dem hier erläuterten Ausführungsbeispiel wird das Signal STAT bei Übereinstimmen der Eingangsgrössen des Vergleichers 20 von einem Wert STAT = 0 auf einen Wert STAT = 1 gesetzt.

Der Ausgangswert Iₛₒₗₗ des Reglers 1 wird über einen Betragsbildner 30 vorzeichenbereinigt und geht als Eingangsgrösse in ein Sample/Hold-Register 40 ein, das als weitere Eingangsgrösse das Signal STAT erhält und durch dieses gesteuert wird. Wenn das Signal von STAT = 0 auf STAT = 1 übergeht, speichert das Sample/Hold-Register 40 den zu diesem Zeitpunkt an seinem Eingang anliegenden vorzeichenbereinigten Wert von Iₛₒₗₗ als einen Wert Iₛ und stellt diesen an seinen Ausgang.

Ein Addierer 45 erhält als Eingangsgrössen den derzeit von dem Sample/Hold-Register 40 gespeicherten und an dessen Ausgang gelegten Wert von Iₛ. Ferner erhält der Addierer als Eingang einen Wert ΔI, der eine zulässige Abweichung für den Wert Iₛₒₗₗ definiert. Vorzugsweise ist diese zulässige Abweichung ΔI eine Abweichung nach oben, so dass der Addierer 45 durch Addieren des gesampleten Wertes Iₛ mit der Abweichung ΔI einen maximalen Wert Iₘₐₓ erhält und als Ausgabe liefert.

Der Ausgabewert Iₘₐₓ des Addierers 45 wird von einem weiteren Vergleicher 50 mit dem betragsbereinigten Ausgabewert des gegenwärtigen Wertes von Iₛₒₗₗ verglichen. Falls dieser betragsbereinigte Momentanwert von Iₛₒₗₗ grösser als der Maximalwert Iₘₐₓ ist, geht ein Ausgabesignal des Vergleichers 50 von einem Wert 0 auf einen Wert 1. Dieses Ausgabesignal des Vergleichers 50 und das Signal STAT des Vergleichers 20 gehen als Eingangsgrössen in ein UND-Glied 60 ein, das bei einem gleichzeitigen Vorhandensein eines Wertes 1 sowohl für das Signal STAT als auch des Ausgangssignals des Vergleichers 50, das Signal SPERRE an seinem Ausgang von einem Wert 0 auf einen Wert 1 setzt.

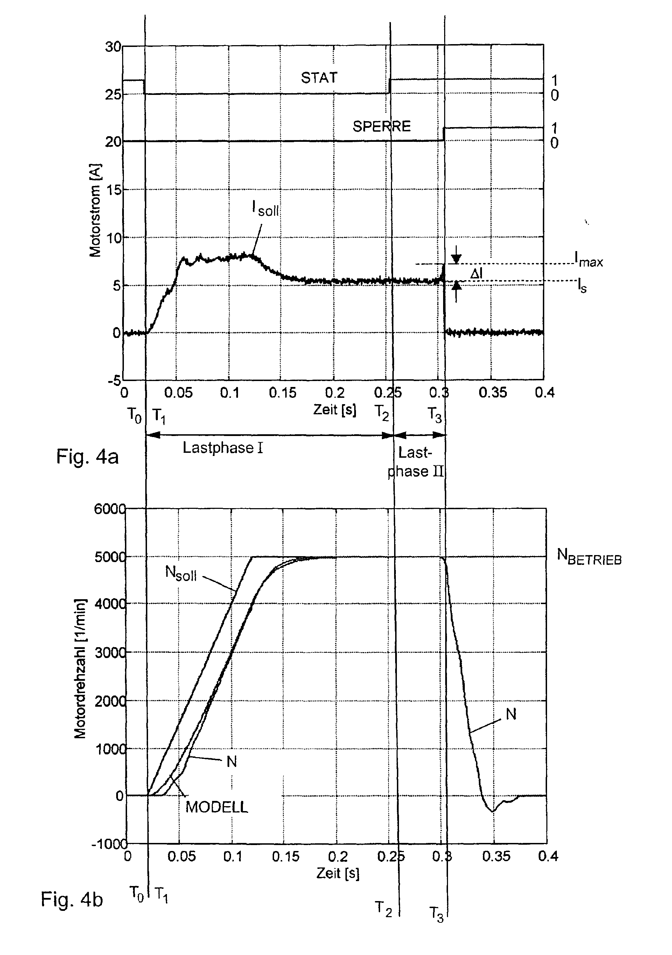

Die Arbeitsweise des Entscheiders 5 wird aus den Diagrammen der Figuren 4a und 4b deutlich, wobei beide Figuren 4a und 4b ein Beispiel für eine niedrige Belastung des Aktuators 3 durch die Last 4 darstellen. Figur 4a zeigt für dieses Belastungsbeispiel zum einen den Verlauf von Iₛₒₗₗ sowie der Signale STAT und SPERRE über der Zeit. Entsprechend stellt die Figur 4b den zeitlichen Drehzahlverlauf für dieses Beispiel dar. Dabei zeigt Figur 4b zum einen den Verlauf der Soll-Drehzahl Nₛₒₗₗ und der in dem Modellbildner 10 erzeugten Modellkurve MODELL. Dem besseren Verständnis wegen stellt Figur 4b zusätzlich noch den tatsächlichen Verlauf des Istwertes N der Drehzahl dar.

Zum Zeitpunkt T₀ (hier: t = 0) bis zu einem Zeitpunkt T₁ (hier etwa: t = 0.02s) stimmen die Werte von Nₛₒₗₗ und der modellierten Kurve MODELL überein (beide sind gleich Null). Dementsprechend ist von T₀ bis T₁ das Signal STAT = 1. Da von T₀ bis zu dem Zeitpunkt T₁ der Wert von Iₛₒₗₗ in etwa 0 ist, ist das Ausgangssignal des Vergleichers 50 ebenso 0, so dass insgesamt das Signal SPERRE = 0 ist.

Ab dem Zeitpunkt T₁ bis zu einem Zeitpunkt T₂ differieren die Werte von Nₛₒₗₗ und der Modellkurve MODELL, so dass der Vergleicher 20 das Signal STAT = 0 setzt. Dementsprechend bleibt auch das Signal SPERRE = 0.

Zum Zeitpunkt T₂ ist ein Betriebswert N_{BETRIEB} für die Drehzahl erreicht, und die Sollwertkurve Nₛₒₗₗ trifft die modellierte Kurve MODELL in diesem Wert N_{BETRIEB}. Da nun beide Werte übereinstimmen, setzt entsprechend der Vergleicher 20 das Signal STAT von 0 auf 1. Der zu diesem Zeitpunkt T₂ in dem Sample/Hold-Register 40 anliegende vorzeichenbereinigte Wert von Iₛₒₗₗ wird in dem Sample/Hold-Register 40 als Iₛ gespeichert und an den Addierer 45 geliefert. Der Addierer 45 addiert zu diesem gespeicherten Wert Iₛ noch die zulässige Abweichung ΔI dazu und gibt die Summe als Ausgang Iₘₐₓ an den Eingang des Vergleichers 50 weiter.

Von T₂ bis zu einem Zeitpunkt T₃ ist der tatsächliche Wert Iₛₒₗₗ kleiner als der maximale Wert Iₘₐₓ, so dass der Ausgabewert des Vergleichers 50 bei 0 und entsprechend der Ausgabewert des UND-Gliedes 60 bei SPERRE = 0 verbleibt.

Erst zu dem Zeitpunkt T₃ überschreitet der Betragswert von Iₛₒₗₗ den Wert Iₘₐₓ, so dass der Vergleicher 50 als Ausgabe von 0 auf 1 übergeht. Da zu diesem Zeitpunkt das Signal STAT = 1 ist und demnach beide Eingangssignale des UND-Gliedes 60 eins sind, muss auch das Ausgangssignal SPERRE des UND-Gliedes 60 auf 1 übergehen. Dieses Signal SPERRE = 1 des Entscheiders 5 wirkt wiederum auf den Verstärker 2. Der Verstärker 2 setzt daraufhin aufgrund des Signales SPERRE = 1 den an den Aktuator 3 gelieferten Stromwert zu Null, so dass der Aktuator 3 drehmomentfrei wird, und die Last 4 den Aktuator 3 langsam auf 0 herunterbremst, wie aus Figur 4b zu entnehmen ist.

Damit speichert der Entscheider 5 jeweils den zum Zeitpunkt des Erreichens des Betriebswertes N_{BETRIEB} zum Zeitpunkt T₂ tatsächlich vorliegenden (vorzeichenbereinigten) Wert von Iₛₒₗₗ in dem Sample/Hold-Register 40 als Iₛ und verwendet jeweils diesen zusammen mit der zulässigen Abweichung ΔI für das Überwachen auf Überschreiten des Drehmoments ab dem Zeitpunkt T₂. Wird das Drehmoment dann überschritten, wird das Signal SPERRE = 1 ausgelöst und der Entscheider 5 stoppt über den Verstärker 2 den Aktuator 3.

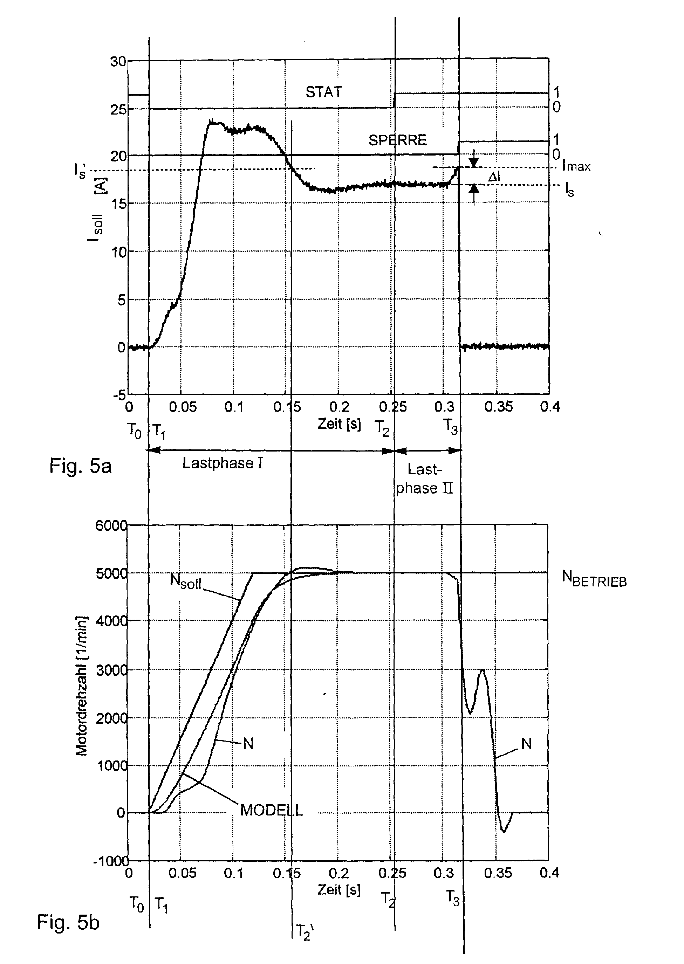

Die Figuren 5a und 5b zeigen entsprechend der Darstellung und Erklärungen zu den Figuren 4a und 4b ein weiteres Beispiel für den Fall einer hohen Belastung, d.h. für den Fall, dass die Last 4 in den Figuren 5 grösser ist als die in den Figuren 4. Dies zeigt sich insbesondere in dem in Figur 5a deutlich erhöhten Werten für den Strom Iₛₒₗₗ gegenüber denen in der Figur 4a. Da die Figuren 4 und 5 sich auf dasselbe Ausführungsbeispiel beziehen sollen, sind die Verläufe von Nₛₒₗₗ und MODELL in den Figuren 4 und 5 gleich und treffen sich dementsprechend auch wieder zum Zeitpunkt T₂.

Entsprechend der obigen Ausführungen zu den Figuren 4a und 4b geht zu dem Zeitpunkt T₁ das Signal STAT von 1 auf 0 und verbleibt als STAT = 0 bis zu dem Zeitpunkt T₂, an dem der Wert von Nₛₒₗₗ wieder mit dem Wert der Kurve MODELL übereinstimmt. Zu diesem Zeitpunkt T₂ wird der augenblickliche Wert Iₛₒₗₗ betragsbereinigt in dem Sample/Hold-Register 40 als Iₛ gespeichert. Bei Überschreiten dieses in dem Sample/Hold-Registers 40 abgespeicherten Wertes Iₛ, addiert mit der Abweichung ΔI, zu dem Zeitpunkt T₃ wird das Signal SPERRE von 0 auf 1 gesetzt und der Verstärker 2 drehmomentfrei geschaltet.

Aus den Unterschieden insbesondere der Figuren 4a und 5a wird ersichtlich, wie die Erfindung je nach Lastsituation einen niedrigeren oder höheren maximalen Strom Iₘₐₓ zulässt, ab dessen Überschreiten der Aktuator 3 dann erst drehmomentfrei geschaltet wird. Hierdurch wird die Abschaltschwelle adaptiv an die tatsächlichen Lastverhältnisse am Ende des Beschleunigungsvorgangs, wenn die Betriebsdrehzahl N_{BETRIEB} erreicht ist, angepasst. Damit kann im Wesentlichen unabhängig von dem tatsächlichen Belastungszustand erkannt werden, ob ein Abschaltgrund vorliegt. Bei zulässigen Betriebszuständen darf nicht abgeschaltet werden.

Wie aus den Figuren 4 und 5 zu entnehmen ist, kann der Betrieb der in Figur 2 dargestellten Steuerung in zwei Lastphasen I und II eingeteilt werden. Die erste Lastphase I beginnt mit dem Beschleunigen des Aktuators 3 zum Zeitpunkt T₁ von 0 auf die gewünschte Drehzahl N_{BETRIEB}. Die Lastphase I endet zu dem Zeitpunkt, an dem die Betriebsdrehzahl N_{BETRIEB} erreicht worden ist, der Beschleunigungsvorgang also abgeschlossen ist. Dies ist zu dem Zeitpunkt T₂ erfüllt.

Die zweite Lastphase II beginnt demnach zum Zeitpunkt T₂ und endet erst wieder mit dem Zeitpunkt T₃, wenn der Wert Iₘₐₓ überschritten wird.

Da während des Hochfahrens auf die Betriebsdrehzahl N_{BETRIEB} in der Lastphase I der Wert von Iₛₒₗₗ auch zulässig erhöht sein kann ohne dass auch ein Abschaltgrund vorliegt, ist in dieser Lastphase I die Fehlererkennung deaktiviert und das Signal SPERRE wird zu 0 gesetzt. Sobald die Betriebsdrehzahl N_{BETRIEB} in der Lastphase II dann erreicht ist, kann die Erkennung auf einen vorliegenden Abschaltgrund bei Überschreiten des maximalen Stromwertes Iₘₐₓ aktiviert werden, so dass erhöhte Drehmomente vermieden werden können.

Wie aus den Figuren 3-5 zu entnehmen ist, benötigt der Entscheider 5 zur Ermittlung des Signales SPERRE als Eingangsgrössen lediglich den Drehzahl-Sollwert Nₛₒₗₗ und den dem Drehmoment entsprechenden Ausgabewert Iₛₒₗₗ des Reglers 1. Anstelle des Istwertes der Drehzahl N, der in den Figuren 4b und 5b lediglich zur weiteren Information gezeigt ist, verwendet der Entscheider 5 die modellierte Motordrehzahlcharakteristik MODELL für die Ermittlung des gesampleten Werten Iₛ.

Es ist ohne Weiteres ersichtlich, dass durch die Wahl und Vorgabe dieser modellierten Drehzahlcharakteristik MODELL insbesondere der Zeitpunkt T₂, an dem der Wert von MODELL mit dem Wert von Nₛₒₗₗ übereinstimmt, beeinflusst werden kann. So kann durch geeignete Auslegung der Charakteristik MODELL die Dauer der Lastphase I verkürzt oder verlängert werden. In einer weiteren Ausführungsform ist dabei der Verlauf der Kurve MODELL nicht statisch vorgegeben, sondern kann adaptiv an die jeweilige Situation angepasst werden.

Die Verwendung des Modellverlaufs MODELL anstelle eines Vergleichs mit der Ist-Drehzahl N hat den Vorteil, dass bei geeigneter Vorgabe des Modellverlaufs MODELL sicher mit einem eingeschwungenen Zustand bei der Betriebsdrehzahl N_{BETRIEB} gerechnet werden kann, und momentane Drehzahlüberhöhungen (z.B. bei einem Überschwingen) nicht den Wert verfälschen.

Es ist ersichtlich, dass anstelle der Modellkurve MODELL ebenso auch der zeitliche Verlauf des Ist-Werts N für den Vergleich des Vergleichers 20 mit dem Sollwert Nₛₒₗₗ verwendet werden kann. Während dies in dem Verlauf mit niedriger Belastung nach Figur 4b zu keiner wesentlichen Änderung der Dauer der Lastphase I führen würde, würde in dem Falle der hohen Belastung nach Figur 5b die Dauer der Lastphase I deutlich verkürzt auf die Zeit zwischen dem Zeitpunkt T₁ und einem Zeitpunkt T₂', an dem die Werte von Nₛₒₗₗ und N übereinstimmen. Während sich dementsprechend in dem Fall der Figuren 4 keine Änderung für den Haltewert des Stromes Iₛ ergibt, wäre in dem Beispiel der Figuren 5 der resultierende Wert Iₛ' zum Zeitpunkt T₂' gegenüber dem Wert Iₛ zum Zeitpunkt T₂ etwas erhöht.

Für die Auswahl der Modellcharakteristik MODELL ist insbesondere darauf zu achten, dass diese dem realen Verlauf des Istwertes N zumindest grundsätzlich entspricht. Allerdings sollte vorzugsweise das gerade bei hoher Belastung auftretende Überschwingen (siehe Figur 5b im Zeitraum zwischen 0,15 und 0,2 Sekunden) keinen Niederschlag in der Modellcharakteristik MODELL finden, da zu diesem Zeitpunkt noch kein eingeschwungener Zustand vorliegt. Geeigneterweise entspricht der Verlauf der Modellcharakteristik MODELL demgemäss mehr dem Verlauf der Ist-Drehzahl N bei sehr niedriger Belastung, wie dies auch in den Fällen der Figuren 4b und 5b so gewählt wurde.

Die in Figur 3 dem Addierer 45 zugeführte definierte Abweichung ΔI kann entweder als fester Wert vorgegeben oder auch adaptiv beispielsweise an die gegenwärtigen Verhältnisse angepasst werden. In den in den Figuren 3-5 dargestellten Ausführungsbeispielen ist es lediglich sinnvoll eine Abweichung nach oben zu überwachen, so dass der Wert von ΔI dem Wert von Iₛ aufaddiert wird, um den Wert Iₘₐₓ zu bestimmen. Entsprechend kann bei Anwendungen, bei denen ebenso oder stattdessen eine Abweichung des Drehmoments nach unten überwacht werden soll (z.B. um zu erkennen, ob Last verloren wird), die Schaltung gemäss Figur 3 entsprechend angepasst werden. An den grundsätzlichen Verhältnissen ändert sich hierdurch jedoch nichts.

Wie aus dem Vergleich der Figuren 4 und 5 für die Fälle unterschiedlicher Belastung zu erkennen ist, erlaubt die Erfindung adaptiv den Wert von Iₛ an die jeweils tatsächlich vorherrschenden Lastverhältnisse während der Lastphase I anzupassen. Auf diese tatsächlichen Lastverhältnisse hin kann dann in der anschliessenden Lastphase II der Drehmomentverlauf von Iₛₒₗₗ auf ungewünschte Überschreitungen und/oder Unterschreitungen überwacht werden.

In dem Ausführungsbeispiel der Anwendung der in Figur 2 gezeigten Steuerung für eine Transporteinrichtung (z.B. in Flugzeugen) entspricht der in den Figuren 4 und 5 dargestellte Bereich zwischen T₀ und T₁ einer Beladungsphase, in der das Transportband jeweils im Ruhezustand mit Gepäckstücken bestückt wird. Zum Zeitpunkt T₁ wird der Aktuator 3 angeschaltet und beschleunigt in der Lastphase I auf die Motorbetriebsdrehzahl N_{BETRIEB}. Die daran sich anschliessende Lastphase II wird so lange durchfahren, bis der Aktuator 3 entweder von Hand oder automatisch durch Erreichen einer gewünschten Position des Förderbandes abgeschaltet wird, oder das Signal SPERRE einen Fehlerzustand signalisiert. Im ersteren Falle kann das Transportband dann wiederum im Ruhezustand weiterbestückt werden, so dass sich die dargestellten Verhältnisse sukzessive wiederholen. Im letzteren Falle einer Fehlfunktion können bei deren Erkennen durch das Auftreten des Signals SPERRE entsprechende Schritte zur Behebung der Fehlfunktion eingeleitet werden.

## Patentansprüche

1. Eine Überwachungseinheit (5) zur Überwachung eines ersten Steuerungswertes (Iₛₒₗₗ) auf Über- oder Unterschreiten eines Schwellwertes (Iₘₐₓ), wobei der erste Steuerungswert (Iₛₒₗₗ) zur Steuerung einer Vorrichtung (3) verwendet wird; aufweisend:
Ermittelungsmittel (10, 20, 30, 40, 45) zum Ermitteln des Schwellwertes (Iₘₐₓ) aus einem Momentanwert (Iₛ) des ersten Steuerungswertes (Iₛₒₗₗ) bei Erreichen eines vorgegebenen Betriebszustandes der Vorrichtung (3), und
Überwachungsmittel (50, 60) zur Überwachung des ersten Steuerungswertes (Iₛₒₗₗ) auf Über- oder Unterschreiten des ermittelten Schwellwertes (Iₘₐₓ) nach Erreichen des vorgegebenen Betriebszustandes der Vorrichtung (3).

2. Die Überwachungseinheit (5) nach Anspruch 1, worin:
das Ermittelungsmittel (10, 20, 30, 40, 45) ein erstes Erkennungsmittel (20) zum Überwachen eines Betriebsparameters (Nₛₒₗₗ) der Vorrichtung (3) zur Erkennung des vorgegebenen Betriebszustandes der Vorrichtung (3) aufweist.

3. Die Überwachungseinheit (5) nach Anspruch 2, worin das erste Erkennungsmittel (20) einen Vergleicher (20) aufweist zum Vergleichen eines vorgegebenen Wertes (Nₛₒₗₗ) des Betriebsparameters mit einem modellierten Wert (MODELL) für den Betriebsparameter,
wobei bei Übereinstimmen der Werte auf ein Erreichen des vorgegebenen Betriebszustandes der Vorrichtung (3) geschlossen wird.

4. Die Überwachungseinheit (5) nach Anspruch 2, worin das erste Erkennungsmittel (20) einen Vergleicher (20) aufweist zum Vergleichen eines vorgegebenen Wertes (Nₛₒₗₗ) des Betriebsparameters mit einem tatsächlichen Wert (N) des Betriebsparameters, wobei bei Übereinstimmen der Werte auf ein Erreichen des vorgegebenen Betriebszustandes der Vorrichtung (3) geschlossen wird.

5. Die Überwachungseinheit (5) nach einem der vorangegangenen Ansprüche, worin das Ermittelungsmittel (10, 20, 30, 40, 45) ein Speichermittel (40) aufweist zum Speichern des Momentanwerts (Iₛ), oder eines davon abgeleiteten Wertes, des ersten Steuerungswertes (Iₛₒₗₗ) zum Zeitpunkt des Erreichens des vorgegebenen Betriebszustandes der Vorrichtung (3).

6. Die Überwachungseinheit (5) nach einem der vorangegangenen Ansprüche, worin das Ermittelungsmittel (10, 20, 30, 40, 45) ein Bestimmungsmittel (45) aufweist zur Bestimmung des Schwellwertes (Iₘₐₓ) aus dem Momentanwert (Iₛ) des ersten Steuerungswertes (Iₛₒₗₗ) bei Erreichen des vorgegebenen Betriebszustandes der Vorrichtung (3) und vorzugsweise aus einer zulässigen Abweichung (ΔI).

7. Die Überwachungseinheit (5) nach einem der vorangegangenen Ansprüche, worin das Überwachungsmittel (50, 60) ein zweites Erkennungsmittel (50) aufweist zur Erkennung, ob der erste Steuerungswert (Iₛₒₗₗ), oder eines davon abgeleiteten Wertes, den ermittelten Schwellwert (Iₘₐₓ) über- oder unterschreitet.

8. Die Überwachungseinheit (5) nach einem der vorangegangenen Ansprüche, worin das Überwachungsmittel (50, 60) ein drittes Erkennungsmittel (60) aufweist zur Erkennung, ob der erste Steuerungswert (Iₛₒₗₗ) den ermittelten Schwellwert (Iₘₐₓ) über- oder unterschreitet und ob der vorgegebene Betriebszustand der Vorrichtung (3) vorliegt.

9. Die Überwachungseinheit (5) nach Anspruch 8, wobei das dritte Erkennungsmittel (60), wenn der vorgegebene Betriebszustand der Vorrichtung (3) vorliegt, bei Über- oder Unterschreiten des ermittelten Schwellwertes (Iₘₐₓ) ein Warnsignal (SPERRE) für die Vorrichtung (3) setzt.

10. Eine Steuerung für einen Aktuator (3), aufweisend:
einen Regler (1), der als Eingangsgrössen einen Sollwert (Nₛₒₗₗ) eines Betriebsparameters für den Aktuator (3) und einen Istwert (N) des Betriebsparameters von dem Aktuator (3) erhält, und der als Ausgang einen ersten Steuerungswert (Iₛₒₗₗ) für den Aktuator (3) liefert,
**gekennzeichnet durch** eine Überwachungseinheit (5) zur Überwachung des ersten Steuerungswertes (Iₛₒₗₗ) auf Über- oder Unterschreiten eines Schwellwertes (Iₘₐₓ), wobei die Überwachungseinheit (5) aufweist:
Ermittelungsmittel (10, 20, 30, 40, 45) zum Ermitteln des Schwellwertes (Iₘₐₓ) aus einem Momentanwert (Iₛ) des ersten Steuerungswertes (Iₛₒₗₗ) bei Erreichen eines vorgegebenen Betriebszustandes, und
Überwachungsmittel (50, 60) zur Überwachung des ersten Steuerungswertes (Iₛₒₗₗ) auf Über- oder Unterschreiten des ermittelten Schwellwertes (Imax) nach Erreichen des vorgegebenen Betriebszustandes des Aktuators (3),
wobei das Ermittelungsmittel (10, 20, 30, 40, 45) ein erstes Erkennungsmittel (20) zum Überwachen des Sollwertes (Nₛₒₗₗ) des Betriebsparameters des Aktuators (3) zur Erkennung des vorgegebenen Betriebszustandes des Aktuators (3) aufweist, und
die Überwachungseinheit (5) bei Über- oder Unterschreiten des ersten Steuerungswertes (Iₛₒₗₗ) über oder unter den ermittelten Schwellwert (Iₘₐₓ) nach Erreichen des vorgegebenen Betriebszustandes des Aktuators (3) den Aktuator (3) sperrt (SPERRE).

11. Eine Transporteinrichtung, vorzugsweise in einem Flugzeug, mit einem Aktuator (3) und einer Steuerung nach Anspruch 10.

12. Ein Verfahren zur Überwachung eines ersten Steuerungswertes (Iₛₒₗₗ) auf Über- oder Unterschreiten eines Schwellwertes (Iₘₐₓ), wobei der erste Steuerungswert (Iₛₒₗₗ) zur Steuerung einer Vorrichtung (3) verwendet wird; aufweisend die Schritte:
(a) Ermitteln des Schwellwertes (Iₘₐₓ) aus einem Momentanwert (Iₛ) des ersten Steuerungswertes (Iₛₒₗₗ) bei Erreichen eines vorgegebenen Betriebszustandes der Vorrichtung (3), und
(b) Überwachung des ersten Steuerungswertes (Iₛₒₗₗ) auf Über- oder Unterschreiten des ermittelten Schwellwertes (Iₘₐₓ) nach Erreichen des vorgegebenen Betriebszustandes der Vorrichtung (3).
